# FASCICULE DE BREVET EUROPEEN

(11) **EP 2 073 995 B1**
(45) Date de publication et mention de la délivrance du brevet: **27.04.2011**
(21) Numéro de dépôt: 07848307.0
(22) Date de dépôt: 02.10.2007
(51) Int. Cl.: B60R 13/10

(54) **PLAQUE DE MARQUAGE ET PROCEDE DE FABRICATION D'UNE TELLE PLAQUE**
ANREISSPLATTE UND VERFAHREN ZUR HERSTELLUNG EINER DERARTIGEN PLATTE
MARKING PLATE AND PROCESS FOR MANUFACTURING SUCH A PLATE

(30) Priorité: 03.10.2006 FR 0608656
(43) Date de publication de la demande: 01.07.2009
(73) Titulaire: Fabricauto, 71000 Macon (FR)
(72) Inventeur: MARION, Jacques, F-01750 Replonges (FR); SPICQ, Jacques, F-17880 Les Portes En Re (FR)
(74) Mandataire: Myon, Gérard Jean-Pierre
(86) Numéro de dépôt international: PCT/FR2007/001608
(87) Numéro de publication internationale: WO 2008/040879

(56) Documents cités:
- EP-A- 0 985 519
- EP-A1- 0 319 589
- CN-A- 1 470 704
- FR-A1- 2 391 067
- US-A1- 2001 018 118
- US-A1- 2003 018 105
- US-A1- 2003 059 610
- US-A1- 2006 182 940

## Description

La présente invention a trait à une plaque de marquage comprenant au moins une plaque support et des symboles obtenus par emboutissage de la plaque de marquage, ainsi qu'à un procédé de fabrication d'une telle plaque de marquage.

Au sens de l'invention, une plaque de marquage peut être une plaque d'immatriculation de véhicule ou toute autre plaque de marquage visuel, telle qu'une plaque de signalisation routière ou analogue. Les symboles portés par une telle plaque de marquage peuvent comprendre des caractères et des formes, figuratives ou non. De plus, au sens de l'invention, on entend par emboutissage toute opération de déformation permanente de la plaque de marquage, y compris par embossage ou par estampage.

Il est connu de fabriquer une plaque d'immatriculation de véhicule par emboutissage d'une plaque en aluminium, de manière à former des caractères en relief sur la plaque. Une telle plaque d'immatriculation peut être de type simple ou de type double. Une plaque de type simple, comprend une unique plaque support en aluminium, sur laquelle les caractères sont formés par embossage. Une plaque de type double comprend une plaque support et une plaque fine de surface, toutes deux en aluminium et solidaires l'une de l'autre. Les caractères sont formés par estampage de la plaque double de sorte que la plaque fine, qui porte la couleur de fond de la plaque, est découpée à l'endroit des caractères pour laisser apparaître la couleur de la plaque support. Au niveau de la découpe de chaque caractère, la plaque support s'imbrique dans la plaque fine et s'y solidarise par grippage, ce qui contribue à l'assemblage en surface de la plaque fine avec la plaque support. Les caractéristiques mécaniques des plaques d'aluminium peuvent être facilement adaptées pour obtenir une qualité d'embossage ou d'estampage optimale. Cependant, l'aluminium est un matériau qui nécessite beaucoup d'énergie pour sa fabrication et son recyclage. Il en résulte un coût fluctuant et relativement important de ce matériau, ce qui contribue à augmenter le coût de fabrication et de retraitement des plaques de marquage en aluminium.

Par ailleurs, il est connu de EP-A-0 319 589 de fabriquer des accessoires intérieurs de véhicules automobiles, tels que des tableaux de bord ou des dossiers de sièges, en matériau composite. Ces accessoires peuvent notamment être obtenus par emboutissage d'une plaque en matériau composite. Ces accessoires ne portent pas de symboles obtenus par emboutissage, à la différence d'une plaque de marquage, et ce document ne se préoccupe pas de la lisibilité de tels symboles.

C'est à ces inconvénients qu'entend plus particulièrement remédier l'invention en proposant une plaque de marquage présentant une qualité optimale de marquage des symboles, tout en ayant un coût de fabrication limité et de bonnes caractéristiques de recyclabilité.

A cet effet, l'invention a pour objet une plaque de marquage, notamment une plaque d'immatriculation ou une plaque de signalisation, comprenant au moins une plaque support et des symboles obtenus par emboutissage de la plaque de marquage, caractérisée en ce que la plaque support est constituée en un matériau composite comportant une matrice et un renfort fibreux comprenant des fibres naturelles.

Les spécialistes de la fabrication de plaques de marquage ont jusqu'à présent considéré que l'utilisation d'un matériau fibreux ne permet pas l'obtention d'une qualité optimale d'embossage ou d'estampage des symboles de la plaque sous l'effet d'un effort moyen d'emboutissage, analogue à l'effort appliqué pour l'emboutissage de plaques en aluminium. Un tel préjugé repose sur la tenue mécanique accrue en déformation d'un matériau composite par rapport à un métal, tenue qui est conférée par les fibres et semble a priori incompatible avec l'emboutissage de symboles nets sur la plaque, et en particulier incompatible avec la découpe et le grippage dans le cas d'une plaque de type double.

Or, il s'est avéré de façon surprenante qu'un emboutissage de bonne qualité peut être réalisé avec une plaque conforme à l'invention, ce qui permet de former des caractères ou des formes nets et bien visibles.

Selon d'autres caractéristiques avantageuses de l'invention, prises isolément ou selon toutes les combinaisons techniquement possibles :
- la matrice du matériau composite est une résine thermoplastique ou thermodurcissable, telle que par exemple une résine polyester, une résine époxyde ou une résine phénolique ;
- le renfort fibreux du matériau composite comprend des fibres de sisal, de chanvre, de lin, de jute, de bois, de coton, de genêt et/ou de raphia ;
- la matrice est en polypropylène alors que le renfort fibreux comprend des fibres de sisal ;
- selon un premier mode de réalisation, la plaque est de type simple, la plaque support étant pourvue d'un revêtement de fond de la plaque de marquage, les symboles étant obtenus par emboutissage de la plaque support et coloration des zones embouties ;
- selon un autre mode de réalisation, la plaque est de type double et comprend une plaque fine de surface solidaire de la plaque support, la plaque fine étant pourvue d'un revêtement de fond de la plaque de marquage, les symboles étant obtenus par emboutissage de la plaque de marquage et évacuation des découpes de la plaque fine ;
- la plaque fine est constituée en un matériau composite comportant une matrice et un renfort fibreux comprenant des fibres naturelle ;
- la plaque fine est constituée en un matériau composite comportant la même nature de matrice et de fibres naturelles que le matériau composite constitutif de la plaque support, mais avec des proportions différentes, de sorte que le coefficient d'allongement de la plaque fine est inférieur au coefficient d'allongement de la plaque support.

L'invention a également pour objet l'utilisation d'au moins un matériau composite comportant une matrice et un renfort fibreux comprenant des fibres naturelles pour la fabrication d'une plaque de marquage telle que décrite ci-dessus.

Enfin, l'invention a pour objet un procédé de fabrication d'une plaque de marquage de type simple telle que décrite ci-dessus, comprenant des étapes dans lesquelles :
a) - on prépare, notamment par moulage ou extrusion, une ébauche de la plaque support formée à partir du renfort fibreux et de la matrice constitutifs de la plaque support;
b) - on découpe la plaque support dans l'ébauche ;
c) - on revêt l'ébauche de plaque support, ou la plaque support une fois découpée dans l'ébauche, d'un revêtement de fond de la plaque de marquage ;
d) - on emboutit la plaque support au moyen de jeux de poinçons et matrices complémentaires à la forme de chacun des symboles.

Par ailleurs, l'invention a pour objet un procédé de fabrication d'une plaque de marquage de type double telle que décrite ci-dessus, comprenant des étapes dans lesquelles :
a') - on prépare, notamment par moulage ou extrusion, une ébauche de la plaque support formée à partir du renfort fibreux et de la matrice constitutifs de la plaque support et on prépare, notamment par moulage ou extrusion, une ébauche de la plaque fine formée à partir du renfort fibreux et de la matrice constitutifs de la plaque fine ;
b') - on découpe la plaque support dans l'ébauche de plaque support et la plaque fine dans l'ébauche de plaque fine ;
c') - on revêt l'ébauche de plaque fine, ou la plaque fine une fois découpée dans l'ébauche, d'un revêtement de fond de la plaque de marquage et l'ébauche de plaque support, ou la plaque support une fois découpée dans l'ébauche, d'un autre revêtement ;
d') - on solidarise la plaque support et la plaque fine ;
e') - on emboutit la plaque de marquage au moyen de jeux de poinçons et matrices complémentaires à la forme de chacun des symboles ;
f') - on évacue les découpes de la plaque fine.

Les caractéristiques et avantages de l'invention apparaîtront dans la description qui va suivre de deux modes de réalisation d'une plaque de marquage selon l'invention, donnée uniquement à titre d'exemple et faite en se référant aux dessins annexés dans lesquels :
- la figure 1 est une vue de face d'une plaque de marquage conforme à un premier mode de réalisation de l'invention ;
- la figure 2 est une section partielle à plus grande échelle selon la ligne II-II à la figure 1 ;
- la figure 2A est une vue à plus grande échelle du détail IIA de la figure 2 ;
- la figure 3 est une section analogue à la figure 2 pour une plaque de marquage conforme à un deuxième mode de réalisation de l'invention ; et
- la figure 3A est une vue à plus grande échelle du détail IIIA de la figure 3.

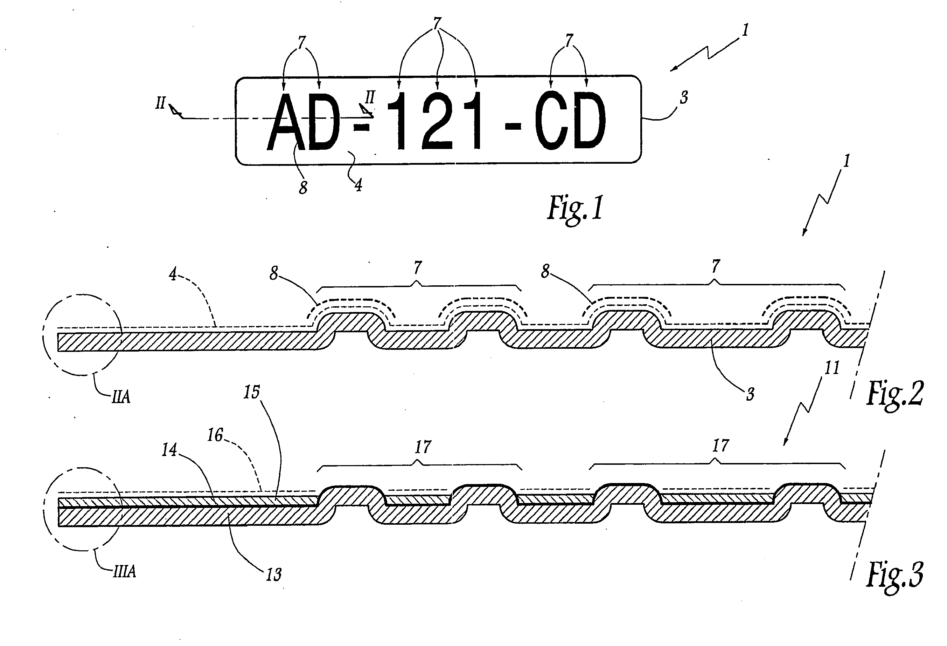

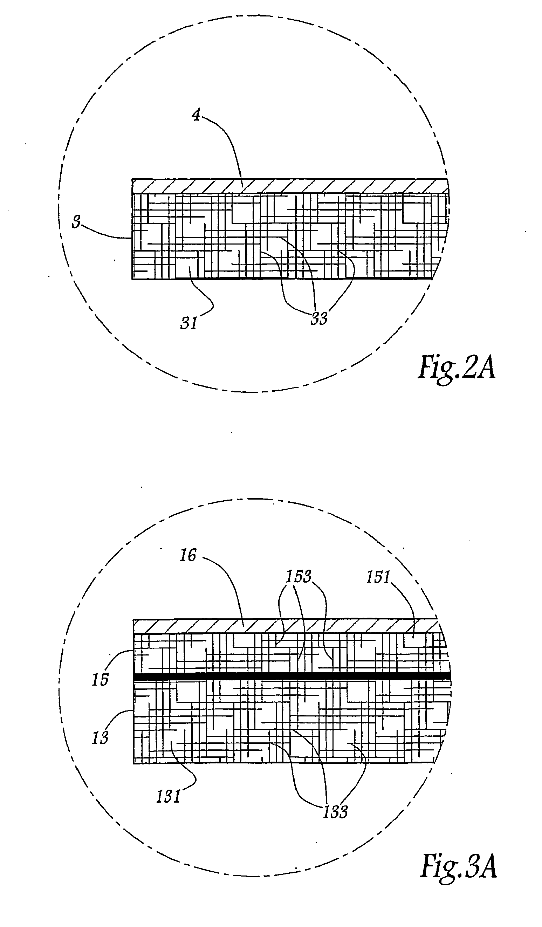

La plaque de marquage 1 représentée sur les figures 1 et 2 est une plaque d'immatriculation de type simple, comprenant une plaque support 3 et des caractères d'immatriculation 7 obtenus par embossage de la plaque 1 au moyen de jeux de poinçons et matrices complémentaires, connus en soi, à la forme de chacun des caractères 7.

La plaque support 3 constitue le fond visuel de la plaque d'immatriculation 1 et est pourvue d'un revêtement 4 de fond de plaque, tel qu'une laque ou un film rétro-réfléchissant. De plus, chaque caractère 7 embossé est pourvu d'un revêtement 8 de nature et de couleur différentes du revêtement 4, telle qu'une encre ou une peinture. Les revêtements 4 et 8 présentent des caractéristiques photométriques et colorimétriques conformes à la réglementation en vigueur pour les plaques d'immatriculation.

La plaque support 3 est constituée en un matériau composite comportant une matrice 31, synthétique, artificielle ou naturelle, et un renfort 33 comprenant des fibres naturelles. Par résine artificielle, on entend une résine obtenue par transformation d'un composé naturel. Dans le mode de réalisation décrit, la plaque support 3 est constituée en polypropylène chargé à 30 % de fibres de sisal, avec des dimensions conformes à la réglementation et une épaisseur de plaque de 1 mm. De manière plus générale, la plaque support 3 peut avoir une épaisseur comprise entre 0,6 mm et 5 mm, de préférence de l'ordre de 1 mm.

En variante, la matrice 31 du matériau composite constitutif de la plaque support 3 peut être tout type de résine synthétique ou naturelle adaptée à sa fonction, tel que, à titre d'exemples non limitatifs, une résine thermoplastique ou thermodurcissable, notamment une résine polyester, une résine époxyde, une résine phénolique, etc. En outre, le renfort fibreux 33 du matériau composite constitutif de la plaque du support 3 peut comprendre d'autres types de fibres naturelles adaptées à cet usage, tels que, à titre d'exemples non limitatifs, des fibres de chanvre, de lin, de jute, de bois, de coton, de genêt, de raphia, etc, ou un mélange de ces fibres. En variante encore, le renfort fibreux 33 peut comprendre des fibres naturelles en association avec des fibres synthétiques, telles que des fibres de verre, de carbone ou d'aramide.

Le pourcentage de fibres présent dans le matériau composite constitutif de la plaque support 3 est adapté pour obtenir une qualité optimale d'embossage des caractères 7. De manière avantageuse, le matériau composite constitutif de la plaque support 3 permet l'embossage de la plaque 1 au moyen d'outils normalement utilisés pour la fabrication d'une plaque d'immatriculation de type simple en aluminium.

En pratique, le pourcentage de fibres dans le matériau constitutif de la plaque 3 est compris entre 15 % et 75 %, de préférence entre 30 % et 60 %.

Un procédé de fabrication de la plaque d'immatriculation 1 conforme à ce premier mode de réalisation comprend des étapes dans lesquelles :
a) Tout d'abord, on prépare une ébauche de la plaque support 3. A cet effet, on mélange du polypropyléne et des fibres de sisal dans les proportions appropriées, le polypropylène étant amené dans un état ramolli par chauffage à une température T supérieure à son point de ramollissement. Le mélange obtenu est injecté dans un moule de forme adaptée, à la température T, puis refroidi depuis la température T jusqu'à la température ambiante, de manière à former une ébauche rigide de plaque ayant une épaisseur de 1 mm.

En variante, l'ébauche de plaque peut être fabriquée à partir de tissu de sisal, ce tissu étant placé dans le moule avant injection du polypropylène ramolli.

L'ébauche de plaque peut également être préparée par tout autre procédé de fabrication de plaques de matériau composite, notamment par extrusion, laminage, etc.
b) On découpe alors la plaque support 3 dans l'ébauche de plaque, selon les longueurs et largeurs souhaitées de la plaque d'immatriculation 1, et on met en forme la périphérie de la plaque support 3 selon les pratiques en vigueur pour la fabrication de plaques d'immatriculation de type simple.
c) Ensuite, on revêt la plaque support 3 obtenue du revêtement 4 de fond de la plaque d'immatriculation 1. En variante, le revêtement 4 de fond peut être apposé sur l'ébauche de plaque préalablement à la découpe d'une ou plusieurs plaques supports dans l'ébauche.
d) On procède alors à l'embossage de la plaque support 3 au moyen de jeux de poinçons et matrices complémentaires à la forme de chacun des caractères 7. A cet effet, on utilise une machine d'embossage sur laquelle les poinçons et matrices ont été préalablement placés selon la composition de l'immatriculation à réaliser, afin d'embosser simultanément la plaque support 3 au niveau de tous les caractères 7.
e) Une fois la plaque support 3 embossée, on colore chaque zone embossée par peinturage ou encrage par transfert thermique, de façon à former le revêtement 8 de chaque caractère 7.

Dans le deuxième mode de réalisation représenté à la figure 2, la plaque de marquage 11 est une plaque d'immatriculation de type double, comprenant une plaque support 13 et une plaque fine 15 de surface ou plaque d'habillage, solidaires l'une de l'autre. La plaque 11 porte des caractères d'immatriculation 17, obtenus par estampage de la plaque 11 au moyen de jeux de poinçons et matrices complémentaires à la forme de chacun des caractères 17.

La plaque fine 15 constitue le fond visuel de la plaque d'immatriculation 11 et est pourvue d'un revêtement 16 de fond de plaque, tel qu'une laque ou un film rétro-réfléchissant. De plus, la plaque support 13 est pourvue d'un revêtement 14 de nature et de couleur différentes du revêtement 16, tel qu'une laque. Les revêtements 14 et 16 présentent des caractéristiques photométriques et colorimétriques conformes à la réglementation.

La plaque support 13 est constituée en un matériau composite comportant une matrice 131 synthétique, artificielle ou naturelle et un renfort 133 comprenant des fibres naturelles. Dans l'exemple décrit, la plaque support 13 est constituée en polypropylène chargé à 30 % de fibres de sisal, avec des dimensions conformes à la réglementation et une épaisseur de plaque de 1 mm. De manière plus générale, la plaque support 13 peut avoir une épaisseur comprise entre 0,6 mm et 5 mm, de préférence de l'ordre de 1 mm.

La plaque fine 15 est constituée en un matériau composite comportant une matrice 151 synthétique ou naturelle et un renfort 153 comprenant des fibres naturelles. Dans l'exemple décrit, la plaque fine 15 est constituée en polypropylène chargé de fibres de sisal, avec des dimensions analogues à celles de la plaque support 13 et une épaisseur de plaque de 0,2 mm. De manière plus générale, la plaque fine 15 peut avoir une épaisseur comprise entre environ 0,05 et 0,6 mm, de préférence de l'ordre de 0,2 mm.

En variante, les matériaux composites constitutifs de la plaque support 13 et de la plaque fine 15 peuvent avoir des matrices et des renforts fibreux de natures différentes. En outre, la plaque fine 15 peut être constituée en un matériau composite ne comportant pas de fibres naturelles, voire en métal, tel que l'aluminium. Comme dans le mode de réalisation précédent, la matrice du matériau composite constitutif de la plaque support 13 et, le cas échéant, de la plaque fine 15, peut être tout type de résine synthétique, artificielle ou naturelle. Le renfort fibreux de ces matériaux composites peut également comprendre tout type de fibres naturelles, éventuellement en association avec des fibres synthétiques.

Les caractéristiques mécaniques des matériaux constitutifs, respectifs de la plaque support 13 et de la plaque fine 15 sont adaptées pour obtenir une qualité optimale d'estampage des caractères 17. En particulier, le coefficient d'allongement de la plaque fine 15 est très inférieur au coefficient d'allongement de la plaque support 13. Ainsi, la découpe de la plaque fine 15 lors de l'emboutissage de la plaque 11 est nette et le grippage de la plaque support 13 sur la plaque fine 15 en surface est efficace. Ceci garantit la qualité de marquage des caractères 17, notamment en termes de lisibilité et de tenue mécanique des caractères. De manière avantageuse, les matériaux constitutifs de la plaque support 13 et de la plaque fine 15 permettent l'estampage de la plaque 11 au moyen d'outils normalement utilisés pour la fabrication de plaques d'immatriculation de type double en aluminium.

Un procédé de fabrication de la plaque d'immatriculation 11 conforme à ce deuxième mode de réalisation comprend des étapes dans lesquelles
a') Tout d'abord, on prépare une ébauche de la plaque support 13 et une ébauche de la plaque fine 15, de manière analogue à la préparation de l'ébauche de la plaque support 3 du premier mode de réalisation. On obtient ainsi une ébauche rigide de plaque support ayant une épaisseur de 1 mm et une ébauche rigide de plaque fine ayant une épaisseur de 0,2 mm.
b') On découpe alors la plaque support 13 dans l'ébauche de plaque support et la plaque fine 15 dans l'ébauche de plaque fine, selon les longueurs et largeurs souhaitées de la plaque d'immatriculation 11, et on met en forme la périphérie de chaque plaque 13 et 15 selon les pratiques en vigueur pour la fabrication de plaques d'immatriculation de type double.
c') Ensuite, on revêt la plaque fine 15 du revêtement 16 de fond de la plaque d'immatriculation 11. On revêt également la plaque support 13 du revêtement 14 correspondant. En variante, les revêtements 14 et 16 peuvent être apposés respectivement sur l'ébauche de plaque support et sur l'ébauche de plaque fine préalablement à la découpe d'une ou plusieurs plaques supports ou plaques fines dans l'ébauche correspondante.
d') On solidarise ensuite la plaque support 13 et la plaque fine 15, par exemple au moyen d'une bande adhésive pelable intercalée entre les deux plaques. En variante, la plaque support 13 et la plaque fine 15 peuvent être solidarisées par d'autres moyens, notamment par grippage en périphérie des deux plaques.
e') On procède alors à l'estampage de la plaque d'immatriculation 11 au moyen de jeux de poinçons et matrices complémentaires à la forme de chacun des caractères d'immatriculation 17. A cet effet, on utilise une machine d'estampage sur laquelle les poinçons et matrices correspondant à la composition de l'immatriculation ont été préalablement placés.
f') Une fois la plaque 11 estampée, on sépare et on évacue les découpes de la plaque fine 15.

De manière classique, les étapes a), b), c) et a'), b'), c') et d') des procédés de fabrication décrits ci-dessus sont réalisées sur le site de fabrication des plaques, alors que les étapes d), e) et e'), f') sont réalisées sur le site de mise en place des immatriculations, par exemple une concession automobile.

Comme il ressort des modes de réalisation décrits précédemment, une plaque de marquage conforme à l'invention permet d'obtenir une qualité optimale d'embossage ou d'estampage des symboles, tout en ayant un prix de revient de fabrication limité grâce aux coûts réduits de son ou de ses matériaux constitutifs, notamment en termes de fabrication, stockage, transport, etc. En effet, les matériaux composites comportant une matrice synthétique ou naturelle chargée de fibres naturelles présentent une densité inférieure à celle de l'aluminium et sont en conséquence relativement peu onéreux, et en particulier moins onéreux que l'aluminium, à masse égale.

En outre, grâce à la nature au moins partiellement naturelle de son ou de ses matériaux composites constitutifs, une plaque de marquage conforme à l'invention présente de bonnes caractéristiques de recyclabilité et de biodégradabilité, ce qui est avantageux pour le traitement des plaques usagées.

Enfin, par un choix adapté de son ou de ses matériaux constitutifs, une plaque de marquage conforme à l'invention peut être fabriquée au moyen d'outils de fabrication de plaques de marquage traditionnelles en aluminium. Ainsi, la fabrication de plaques de marquage selon l'invention ne nécessite pas la mise au point de nouveaux outils de découpe, d'assemblage, d'embossage ou d'estampage.

L'invention n'est pas limitée aux exemples décrits et représentés. En particulier, l'invention a été décrite pour une plaqué d'immatriculation de véhicule. Elle est cependant transposable à tout type de plaques de marquage comprenant des symboles obtenus par emboutissage de la plaque, telles que par exemple des panneaux de signalisation verticale, des panneaux routiers ou publicitaires, des plaques et numéros de rue, ou autres.

## Revendications

1. Plaque de marquage (1 ; 11), notamment plaque d'immatriculation ou plaque de signalisation, comprenant au moins une plaque support (3 ; 13) et des symboles (7 ; 17) obtenus par emboutissage de la plaque de marquage, **caractérisée en ce que** la plaque support (3 ; 13) est constituée en un matériau composite comportant une matrice (31 ; 131) et un renfort fibreux (33 ; 133) comprenant des fibres naturelles.

2. Plaque de marquage selon la revendication 1, **caractérisée en ce que** la matrice (31 ; 131) du matériau composite est une résine thermoplastique ou thermodurcissable, telle que par exemple une résine polyester, une résine époxyde ou une résine phénolique.

3. Plaque de marquage selon l'une quelconque des revendications 1 ou 2, **caractérisée en ce que** le renfort fibreux (33 ; 133) du matériau composite comprend des fibres de sisal, de chanvre, de lin, de jute, de bois, de coton, de genêt et/ou de raphia.

4. Plaque de marquage selon l'une quelconque des revendications précédentes, **caractérisée en ce que** la matrice (31 ; 131) est en polypropylène alors que le renfort fibreux (33 ; 133) comprend des fibres de sisal.

5. Plaque de marquage selon l'une quelconque des revendications 1 à 4, **caractérisée en ce qu'**elle est de type simple, la plaque support (3) étant pourvue d'un revêtement (4) de fond de la plaque de marquage (1), les symboles (7) étant obtenus par emboutissage de la plaque support et coloration des zones embouties.

6. Plaque de marquage selon l'une quelconque des revendications 1 à 4, **caractérisée en ce qu'**elle est de type double et comprend une plaque fine (15) de surface solidaire de la plaque support (13), la plaque fine étant pourvue d'un revêtement (16) de fond de la plaque de marquage (11), les symboles (17) étant obtenus par emboutissage de la plaque de marquage et évacuation des découpes de la plaque fine.

7. Plaque de marquage selon la revendication 6, **caractérisée en ce que** la plaque fine (15) est constituée en un matériau composite comportant une matrice (151) et un renfort fibreux (153) comprenant des fibres naturelles.

8. Plaque de marquage selon la revendication 7, **caractérisée en ce que** la plaque fine (15) est constituée en un matériau composite comportant la même nature de matrice et de fibres naturelles que le matériau composite constitutif de la plaque support (13), mais avec des proportions différentes, de sorte que le coefficient d'allongement de la plaque fine est inférieur au coefficient d'allongement de la plaque support.

9. Utilisation d'au moins un matériau composite comportant une matrice (31 ; 131, 151) et un renfort fibreux (33 ; 133, 153) comprenant des fibres naturelles pour la fabrication d'une plaque de marquage (1 ; 11) selon l'une quelconque des revendications précédentes.

10. Procédé de fabrication d'une plaque de marquage (1) de type simple selon la revendication 5, **caractérisé en ce qu'**il comprend des étapes dans lesquelles :
a) - on prépare une ébauche de la plaque support (3) formée à partir du renfort fibreux (33) et de la matrice (31) constitutifs de la plaque support ;
b) - on découpe la plaque support (3) dans l'ébauche ;
c) - on revêt l'ébauche de plaque support, ou la plaque support (3) une fois découpée dans l'ébauche, d'un revêtement (4) de fond de la plaque de marquage ;
d) - on emboutit la plaque support (3) au moyen de jeux de poinçons et matrices complémentaires à la forme de chacun des symboles (7).

11. Procédé de fabrication d'une plaque de marquage (11) de type double selon la revendication 7, **caractérisé en ce qu'**il comprend des étapes dans lesquelles :
a') - on prépare une ébauche de la plaque support (13) formée à partir du renfort fibreux (133) et de la matrice (131) constitutifs de la plaque support et on prépare une ébauche de la plaque fine (15) formée à partir du renfort fibreux (153) et de la matrice (151) constitutifs de la plaque fine ;
b') - on découpe la plaque support (13) dans l'ébauche de plaque support et la plaque fine (15) dans l'ébauche de plaque fine ;
c') - on revêt l'ébauche de plaque fine, ou la plaque fine (15) une fois découpée dans l'ébauche, d'un revêtement (16) de fond de la plaque de marquage (11) et l'ébauche de plaque support, ou la plaque support (13) une fois découpée dans l'ébauche, d'un autre revêtement (14) ;
d') - on solidarise la plaque support (13) et la plaque fine (15) ;
e') - on emboutit la plaque de marquage (11) au moyen de jeux de poinçons et matrices complémentaires à la forme de chacun des symboles (17) ;
f') - on évacue les découpes de la plaque fine (15).

## Claims

1. Marking plate (1; 11), notably registration plate or identification plate, comprising at least one backing plate (3; 13) and symbols (7; 17) obtained by pressing the marking plate, **characterized in that** the backing plate (3; 13) is made of a composite material comprising a matrix (31; 131) and a fibrous reinforcement (33; 133) containing natural fibres.

2. Marking plate according to Claim 1, **characterized in that** the matrix (31; 131) of the composite material is a thermoplastic or thermosetting resin, such as a polyester resin, an epoxy resin or a phenolic resin, for example.

3. Marking plate according to either one of Claims 1 and 2, **characterized in that** the fibrous reinforcement (33; 133) of the composite material contains fibres of sisal, hemp, flax, jute, wood, cotton, broom and/or raffia.

4. Marking plate according to any one of the preceding claims, **characterized in that** the matrix (31; 131) is of polypropylene while the fibrous reinforcement (33; 133) contains sisal fibres.

5. Marking plate according to any one of Claims 1 to 4, **characterized in that** it is of single type, the backing plate (3) being provided with a coating (4) that forms the background of the marking plate (1), the symbols (7) being obtained by pressing the backing plate and applying colour to the pressed regions.

6. Marking plate according to any one of Claims 1 to 4, **characterized in that** it is of the double type and comprises a thin surface plate (15) firmly secured to the backing plate (13), the thin plate being provided with a coating (16) that forms the background of the marking plate (11), the symbols (17) being obtained by pressing the marking plate and removing the cut-out portions of thin plate.

7. Marking plate according to Claim 6, **characterized in that** the thin plate (15) is made of a composite material comprising a matrix (151) and a fibrous reinforcement (153) containing natural fibres.

8. Marking plate according to Claim 7, **characterized in that** the thin plate (15) consists of a composite material containing the same kind of matrix and of natural fibres as the composite material of which the backing plate (13) is made, but in different proportions, so that the tensile elastic modulus of the thin plate is lower than the tensile elastic modulus of the backing plate.

9. Use of at least one composite material comprising a matrix (31; 131, 151) and a fibrous reinforcement (33; 133, 153) containing natural fibres to manufacture a marking plate (1; 11) according to any one of the preceding claims.

10. Method of manufacturing marking plate (1) of the single type according to Claim 5, **characterized in that** it comprises steps in which:
a) - a backing plate (3) blank formed from the fibrous reinforcement (33) and from the matrix (31) which together make up the backing plate is prepared;
b) - the backing plate (3) is cut from the blank;
c) - the backing plate blank, or the backing plate (3) once cut from the blank, is coated with a coating (4) that forms the background of the marking plate;
d) - the backing plate (3) is pressed using matching sets of punches and dies in the shape of each of the symbols (7).

11. Method of manufacturing a marking plate (11) of the double type according to Claim 7, **characterized in that** it comprises steps in which:
a') - a backing plate (13) blank is prepared, this being formed from the fibrous reinforcement (133) and from the matrix (131) which together make up the backing plate, and a thin plate (15) blank is prepared, this being formed from the fibrous reinforcement (153) and from the matrix (151) which together make up the thin plate;
b') - the backing plate (13) is cut from the backing plate blank and the thin plate (15) is cut from the thin plate blank;
c') - the thin plate blank, or the thin plate (15) once cut from the blank, is covered with a coating (16) that forms the background of the marking plate (11), and the backing plate blank, or the backing plate (13) once cut from the blank, is covered with a different coating (14);
d') - the backing plate (13) and the thin plate (15) are firmly secured to one another;
e') - the marking plate (11) is pressed using matching sets of punches and dies in the shape of each of the symbols (17);
f) - the cut-out portions of thin plate (15) are removed.

## Patentansprüche

1. Markienmgsplatte (1; 11), insbesondere ein Nummernschild oder eine Ausschilderungsplatte, mit mindestens einer Trägerplatte (3; 13) und Symbolen (7; 17), die durch Tiefziehen der Markiemngsplatte erhalten werden, **dadurch gekennzeichnet, dass** die Trägerplatte (3; 13) aus einem Verbundmaterial besteht, das eine Matrix (31; 131) und eine Naturfasern enthaltende Faserverstärkung (33; 133) umfasst.

2. Markierungsplatte nach Anspruch 1, **dadurch gekennzeichnet, dass** die Matrix (31; 131) des Verbundmaterials ein thermoplastisches oder wärmehärtbares Harz, wie zum Beispiel ein Polyesterharz, ein Epoxidharz oder ein Phenolharz, ist.

3. Markierungsplatte nach Anspruch 1 oder 2, **dadurch gekennzeichnet, dass** die Faserverstärkung (33; 133) des Verbundmaterials Sisal-, Hanf-, Flachs-, Jute-, Holz-, Baumwoll-, Ginster- und/oder Raffiafasern umfasst.

4. Markierungsplatte nach einem der vorhergehenden Ansprüche, **dadurch gekennzeichnet, dass** die Matrix (31; 131) aus Polypropylen besteht, während die Faserverstärkung (33; 133) Sisalfasem umfasst.

5. Markierungsplatte nach einem der Ansprüche 1 bis 4, **dadurch gekennzeichnet, dass** sie einfacher Art ist, wobei die Trägerplatte (3) mit einer Grundierung (4) der Markierungsplatte (1) versehen ist, wobei die Symbole (7) durch Tiefziehen der Trägerplatte und Färbung der tiefgezogenen Zonen erhalten werden.

6. Markierungsplatte nach einem der Ansprüche 1 bis 4, **dadurch gekennzeichnet, dass** sie doppelter Art ist und eine dünne Platte (15) mit einer fest mit der Trägerplatte (13) verbundenen Fläche umfasst, wobei die dünne Platte mit einer Grundierung (16) der Markierungsplatte (11) versehen ist, wobei die Symbole (17) durch Tiefziehen der Trägerplatte und Entfernen der Ausschnitte von der dünnen Platte erhalten werden.

7. Markierungsplatte nach Anspruch 6, **dadurch gekennzeichnet, dass** die dünne Platte (15) aus einem Verbundmaterial besteht, das eine Matrix (151) und eine Naturfasern enthaltende Faserverstärkung (153) umfasst.

8. Markierungsplatte nach Anspruch 7, **dadurch gekennzeichnet, dass** die dünne Platte (15) aus einem Verbundmaterial besteht, das die gleiche Art von Matrix und Naturfasern wie das die Trägerplatte (13) bildende Verbundmaterial, aber in verschiedenen Anteilen, aufweist, so dass der Dehnungskoeffizient der dünnen Platte kleiner als der Dehnungskoeffizient der Trägerplatte ist.

9. Verwendung mindestens eines Verbundmaterials, das eine Matrix (31; 131, 151) und eine Naturfasern enthaltende Faserverstärkung (33; 133, 153) umfasst, zur Herstellung einer Markierungsplatte (1; 11) nach einem der vorhergehenden Ansprüche.

10. Verfahren zur Herstellung einer Markierungsplatte (1) einfacher Art nach Anspruch 5, **dadurch gekennzeichnet, dass** es die folgenden Schritte umfasst:
a) - Herstellen eines Rohlings der Trägerplatte (3), der aus der Faserverstärkung (33) und der Matrix (31) besteht, die die Trägerplatte bilden;
b) - Ausschneiden der Trägerplatte (3) aus dem Rohling;
c) - Beschichten des Trägerplattenrohlings oder der Trägerplatte (3) nach dem Ausschneiden aus dem Rohling mit einer Grundierung (4) der Markierungsplatte;
d) - Tiefziehen der Trägerplatte (3) mittels komplementärer Stanzsätze und Matrices in der Form jedes der Symbole (7).

11. Verfahren zur Herstellung einer Markierungsplatte (11) doppelter Art nach Anspruch 7, **dadurch gekennzeichnet, dass** es die folgenden Schritte umfasst:
a') - Herstellen eines Rohlings der Trägerplatte (13), der aus der Faserverstärkung (133) und der Matrix (131) besteht, die die Trägerplatte bilden, und Herstellen eines Rohlings der dünnen Platte (15), der aus der Faserverstärkung (153) und der Matrix (151) besteht, die die dünne Platte bilden;
b') - Ausschneiden der Trägerplatte (13) aus dem Rohling der Trägerplatte und der dünnen Platte (15) aus dem Rohling der dünnen Platte;
c') - Beschichten des Rohlings der dünnen Platte oder der dünnen Platte (15) nach dem Ausschneiden aus dem Rohling mit einer Grundierung (16) der Markierungsplatte (11) und des Rohlings der Trägerplatte oder der Trägerplatte (13) nach dem Ausschneiden aus dem Rohling mit einer anderen Beschichtung (14);
d') - festes Verbinden der Trägerplatte (13) und der dünnen Platte (15);
e') - Tiefziehen der Markierungsplatte (11) mittels komplementärer Stanzsätze und Matrices in der Form jedes der Symbole (17);
f')- Entfernen der Ausschnitte von der dünnen Platte (15).
